(19) Europäisches Patentamt
European Patent Office
Office européen des brevets

(11) Publication number: **0 387 960 A1**

# (12) EUROPEAN PATENT APPLICATION

(21) Application number: **90200582.6**

(51) Int. Cl.$^5$: **G06F 15/38**

(22) Date of filing: **09.03.90**

(30) Priority: **13.03.89 NL 8900600**

(43) Date of publication of application: **19.09.90 Bulletin 90/38**

(84) Designated Contracting States: **AT BE CH DE DK ES FR GB GR IT LI LU NL SE**

(71) Applicant: **BSO/BURO VOOR SYSTEEMONTWIKKELING B.V.**
**Kon. Wilhelminalaan 3, P.O. Box 8348**
**NL-3503 RH Utrecht(NL)**

(72) Inventor: **Sadler, Victor**
**Livingstonelaan 304**
**NL-3526 HW Utrecht(NL)**

(74) Representative: **de Bruijn, Leendert C. et al**
**Nederlandsch Octrooibureau**
**Scheveningseweg 82 P.O. Box 29720**
**NL-2502 LS 's-Gravenhage(NL)**

## (54) Bilingual knowledge bank.

(57) Bilingual knowledge bank comprising:
- a bilingual corpus of text consisting of a continuous text or texts in a first language and the corresponding translation in a second language,
- a syntactic structure corresponding to the text in the first language, and in which all the syntactic relations between the translation units of the text in the first language are shown,
- a syntactic structure corresponding to the translation in the second language, and in which all the syntactic relations between the translation units of the text in the second language are shown,
- and where translation units are identified by means of a code in both these syntactic structures, in such a way that a translation unit in the text in the one language is linked to the corresponding translation unit in the translation in the other language.

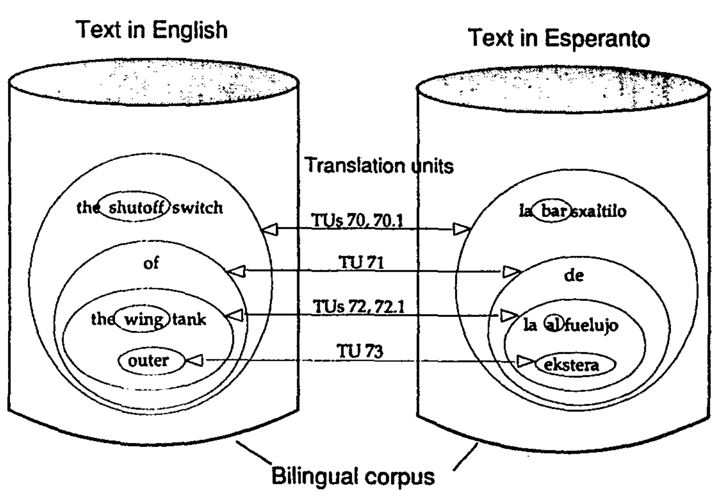


Fig. 3

EP 0 387 960 A1

## Bilingual Knowledge Bank

This invention concerns a bilingual knowledge bank containing a bilingual corpus of text which consists of a text in one language and the translation of that text in a second language. In general terms, the invention is concerned with integrating general knowledge, lexical knowledge, bilingual dictionaries, text representation and other knowledge sources into a single, dynamic knowledge bank which, to a significant extent at least, can be compiled and updated automatically from a number of corpora.

In the development of machine translation systems there are two major problems which strongly influence the speed with which any such system can be built, as well as the associated costs. The first of these problems is the need to build up enormous bilingual dictionaries. The second problem is related to the need to build other kinds of knowledge into the translation system as well.

The degree to which these other sources of non-lexical knowledge are really necessary is a matter on which not all machine translation researchers are agreed. What the experts in this fields are agreed on, however, is that the need for large and detailed dictionaries is inescapable, and, moreover, that a large proportion of the costs involved in the design of machine translation systems are determined by the dictionaries, which are very difficult to compile and to update.

Conventional hand-held dictionaries, however large, are no solution to the dictionary problem. Even if such existing dictionaries are automatically converted into machine-readable form (or are already available in such a form), human aid and human understanding are still very much needed for the correct interpretation of the information which can be looked up in such dictionaries. Information to be used by an machine translation system has to be far more explicit. Typically, conventional bilingual dictionaries contain lists of possible translations for each entry word, with little or no indication of the conditions under which one or other of those alternatives is to be selected. There are certainly no indications in such conventional dictionaries on which a computer could base a decision. The following example from an English-French technical dictionary (Ernst, 1984: Comprehensive dictionary of engineering and technology, Wiesbaden: Brandstetter) illustrates the problem:

distance (between points)/ distance f, cart m, cartement m, loignement m, espace m, intervalle m.

A computer can only make a selection from such a list of possible alternatives if the computer is provided with precise indications on the basis of which one of the alternative translations is to be preferred to the others. This problem is discussed in greater detail by A.K. Melby in "Lexical transfer: A missing element in linguistics theories", 11th Int. Conf. on Comp. Ling., proc. of Coling '86, Bonn, pp. 104-106.

One method of making a selection from such a list of alternatives is described in Dutch patent application No. 89.00587, also in the name of the present applicant, entitled "Werkwijze voor het bepalen van de semantische verwantheid van lexicale componenten in een tekst" ("Method for determining the semantic relatedness of lexical items in a text").

Another deficiency of most conventional dictionaries is that they fail to cover the kind of structural transformations which the translator needs to apply in nearly every sentence, e.g.:

English source sentence: This implies bringing to the consciousness of every industrial organization the fact that...

French translation: Cela implique que les responsables de l'industrie prennent conscience du fait que...

Another example of a transformation can be seen in:

English source sentence: The board unanimously confirms the mandate

French translation: Le conseil est unanime dans sa confirmation du mandat

If the computer in a machine translation system is expected to produce high-quality translations, it has somehow to be acquainted with all the practical translation expertise the human translator possesses. Such knowledge, however, is not to be found in existing dictionaries in anything like the required amount. It will be obvious that there is a need for a method of introducing the knowledge of the professional translator into a machine translation system.

Although efforts have already been made in this field, developing a workable bilingual dictionary that is suitable for use in a machine translation system has proved to be a daunting task which requires an enormous investment in specialised human labour, since the task cannot as yet be performed automatically within the state of the art. Moreover, each language pair demands two bilingual dictionaries, since probably all existing dictionary structures for machine translation systems only work in one direction. Thus there exists a real need for a method of constructing a bilingual dictionary for machine translation systems semi-automatically or, if possible, fully automatically. As Byrd et al. remarked in 1987 ("Tools and Methods for Computational Lexicology", IBM Research Report RC 12642), the construction of computer systems for processing natural language requires the creation of large computerized lexicons with extensive and accurate syntactic and semantic information about the words they contain. It is also clear that it will be impossible to build these lexicons in the number and sizes required with only the manual labour of individual computer scientists, linguists and lexicographers. There are too many systems requiring too much information about too many words for such a manual approach to have any chance of success.

As for other kinds of knowledge, it is generally acknowledged that "understanding" plays an important part in any successful machine translation system. The question is only how large and extensive a part it should play. Some problems could be solved by knowledge derived from the whole of the current text, as in:

"He could not agree with the amendments to the draft resolution proposed by the delegation of India."

A correct translation of this sentence into French is only possible if the translator (or the machine translation system) knows whether India proposed the amendments to the resolution, or the resolution itself. Other ambiguities whose resolution requires of the translator or of the machine translation system more general knowledge are ambiguities such as:

"pregnant women and children"

where, again, the translator or machine translation system needs to know whether both the women and the children, or only the women, are pregnant, if such a sentence is to be correctly translated into French. Although this example presents no problems for a human translator, a machine translation system does not possess that general knowledge of the world which allows a human translator to make the right decision as a matter of course.

Research into knowledge representation for the purposes of giving a computer some "understanding" of human language has until now concentrated on building "deep" abstractions of meaning, as independent as possible from the actual words of any specific human language. Yet many aspects of knowledge which are extremely relevant to translation, e.g. questions of time/tense, aspect, emphasis and focus, are delicately entwined with the form in which they are expressed. For this reason, knowledge representation in the form of networks or hierarchies of extra-linguistic concepts is of itself inadequate for the purposes of machine translation. Moreover, such methods are even more labour-intensive than the building of computer dictionaries has proved to be, and it is safe to say that no-one has yet developed a representation which is even remotely practicable for a large-scale system which goes beyond the limits of a narrow and specialized domain.

Another aspect of understanding which needs to be built into a machine translation system is the possibility of breaking out of the knowledge base and looking elsewhere for information. Just as a human translator is frequently obliged to turn to external information sources (encyclopaedias, colleagues, newspapers, the author of the text being translated, etc.) in order to arrive at a correct understanding of the text to be translated, so the computer too must be provided with a means of accessing external knowledge sources, e.g. via a dialogue with the computer user. This principle implies that an automatic translation system must also be provided with the means to "explain" its problem to the operator, and building this "explanation" capacity into an automatic translation system is therefore by no means trivial.

A recent attempt to effect a coupling between textual units in a source language corpus, and the corresponding text units in the translation of that corpus in the target language, has been described in a number of papers by B. Harris. See: 1) Harris, Brian (1988): "Bi-text, a new concept in translation theory", Language Monthly, 54, p.8-10, 2) Harris, Brian (1988): "Are you bitextual?", Language Technology, May/June 1988, 7, p.41 and 3) Harris, Brian (1988): "Interlinear bitext", Language Technology, Nov./Dec. 1988, 10, p.12. The concept of interlinear BITEXT as described by B. Harris involves the splitting-up of the source text into "translation units", i.e. autonomous phrases which, in general, a translator will always translate in the same way in the target language. Such phrases contain individual words with sufficient context to illustrate the usage of those individual words. The target text is likewise split up into "translation units", so that for every translation unit in the source language there is one translation unit in the target language. Using this concept of interlinear BITEXT, the translator can, as it were, leaf through his own previous translation work, and the computer screen can display one or more source language translation units at a time, together with the corresponding translation units in the target language. In practice, a translator can use this facility to convert whole phrases, appearing in the text to be translated, directly into the target language, following the model of examples displayed on the screen. Such a BITEXT facility can also function as a dictionary, showing each word in context. If the BITEXT corpus is large enough, looking up a single entry word which can have several different meanings will cause several different translation units to be displayed, each using the entry word in a different context.

A disadvantage of the linear BITEXT concept is that this concept provides in principle no more than a tool for the human translator. The BITEXT facility functions as an extensive dictionary in which not only various translations of words are available, but where the words are also shown in their respective contexts, together with the translation of that global context. A computer, however, is incapable of converting a given source language text into a given target language text, automatically or semi-automatically, only on the basis of such interlinear BITEXT data.

The idea of using fragments of bilingual text as a kind of translation aid or dictionary had been put forward previously by M. Nagao in "A framework of a mechanical translation between Japanese and English by analogy principle" in Artificial and Human Intelligence, Elsevier, 1984, pp. 173-180. In this paper, Nagao proposed a system of automatic translation based on a set of example sentences. He writes: "We have to see as wide a scope as possible in a sentence, and the translation must be from a block of words to a block of words. To realize this we have to store varieties of example sentences in the dictionary and to have a mechanism to find out analogical example sentences for the given one."

Nagao suggests that this technique of translating by drawing an analogy between the phrase to be translated and some example phrase already encountered, is close to what the human language learner actually does when using dictionary examples to generate original sentences.

Nagao's proposal has since been implemented in a limited fashion by E. Sumita and Y. Tsutsumi. See their paper "A Translation Aid System Using Flexible Text Retrieval Based on Syntax-Matching", published in Proceedings Suppl. 2nd. Int. Conf. on Theoretical and Methodological Issues in Machine Translation of Natural Languages, 1988, Pittsburgh, Carnegie Mellon University Center for Machine Translation. Their system, intended as a computer aid to the human translator, uses a data base of equivalent example sentences in Japanese and English. It also includes an index of function words appearing in the example sentences. The pattern of function words appearing in the Japanese sentence to be translated is matched against the indexed patterns, and those example sentences which give the best match are retrieved and displayed for the operator, together with their English equivalents. The translator can then use the information displayed to select whichever example is felt to be closest to the input structure, and edit the English version as necessary, replacing one or more of the words it contains. Although Sumita and Tsutsumi intend to try to use the system based on Nagao's ideas to generate target sentences automatically, the implementation reported to date is still far from constituting a semi-automatic machine translation system, much less a fully-automatic one. A basic weakness of the system is still the unavoidable stumbling-block of lexical transfer, for one thing. (For this, Nagao proposed using a thesaurus to check on the similarity of the words to be translated to those in the example sentences.) Moreover, Nagao himself admitted in 1988 (at the above-mentioned Coling Conference) that "nobody knows how to organise a large body of knowledge for machine translation".

The present invention aims at solving these two enormous and fundamental problems, viz. those of building huge dictionaries and of constructing a comprehensive and open-ended knowledge bank. In other words: a structure which can function, at one and the same time, as a powerful, two-way bilingual dictionary and as a representation for all the various levels of knowledge relevant to translation, from purely linguistic knowledge to purely extra-linguistic or encyclopaedic knowledge, and which furthermore can to a large extent be constructed automatically.

The invention now provides for a bilingual knowledge bank comprising:

- a bilingual corpus of text consisting of a continuous text or texts in a first language and the corresponding translation in a second language,
- a syntactic structure corresponding to the text in the first language, and in which all the syntactic relations between the translation units of the text in the first language are shown,
- a syntactic structure corresponding to the text in the second language, and in which all the syntactic relations between the translation units of the text in the second language are shown,
- the identification, in both these syntactic structures, of translation units by means of a code, in such a way that a translation unit in the text in the one language is unambiguously linked to the corresponding translation unit in the translation in the other language.

The knowledge bank structure proposed in the present invention in fact creates a database structure which contains the following data:

- syntactic transformation rules (translation rules);
- rules of lexical transfer (dictionary equivalents);
- contextual information about words and morphemes;
- a structured representation of the text currently being translated;
- domain-specific knowledge (specialised knowledge on the subject of the text);
- knowledge of the world (encyclopaedic knowledge and knowledge of matters which are self-evident for a human but not for a computer).

The construction of a bilingual knowledge bank as defined by the invention is assumed to be based on a corpus of text in one language and a high-quality human translation of that text in another language, taken, for example, from an existing multilingual corpus. The size of the chosen corpus of text should be such that the corpus contains adequate specialized knowledge on any given subject, in order to be able to provide sufficient knowledge during later use.

Each version of the corpus text, i.e. both the version in the one language and the version in the other language, must be analysed syntactically, structural ambiguities being resolved in consultation with a human operator or translator wherever necessary. In this way, the bilingual corpus is converted to a series of parallel parse tree structures. The syntactic parsing of both texts can be accomplished using a method such as that described in Dutch patent application No. 89.00247, already submitted on 1st February 1989, also in the name of the present applicant.

The next step in the construction of the bilingual knowledge bank as defined by the invention is to couple together all the corresponding parse trees by identifying the translation units they contain. A "translation unit" is defined for present purposes as a combination of two fragments of text, in different languages, which can be considered equivalent. This text fragment may consist of a single word, a phrase or clause, or even a whole sentence. The essence of a translation unit is that it is autonomous. That is to say that the translation unit can be used without necessarily causing alterations in the surrounding context. Just as in the resolution of structural ambiguities, this identification of translation units requires the help of a human operator or translator (who in this case must be competent in both languages). However, as the bilingual knowledge bank as defined by the invention grows, the knowledge bank can itself be used as a tool for identifying translation units, and thus the system can be expected to identify more and more units automatically, asking only for confirmation from the human operator or translator. The two halves of each translation unit can be coupled together by assigning them the same identification code.

In the following sections some examples of the application of the invention are discussed in more detail with reference to the accompanying figures.

The first example makes use of a very small bilingual corpus, consisting of only one sentence in English and the corresponding translation in Esperanto. The corpus thus consists of:

<u>Sample corpus No. 1</u>

English: "Set the shutoff switch of the right-hand outer wing tank to OPEN"

Esperanto: "Movu la barsxaltilon de la dekstra ekstera alfuelujo al OPEN".

In accordance with the invention, a syntactic parse structure must be generated for each of the two sentences. The generation of such structures can be achieved by using any known syntactic analyser or parser. Such syntactic analysers or parsers have been extensively described in the current technical literature and thus require no further explanation for a specialist in this field. Such a syntactic analyser can produce the results of its analysis in the form of a tree structure, for example.

Figure 1 shows the parse structure of the above English sentence, while figure 2 shows the parse structure of the corresponding sentence in Esperanto. In figures 1 and 2, the words of each sentence are located on the nodes of the tree structure, while the label shown on each of the arcs or branches which join up the nodes of the tree indicates the syntactic relation between the two words located on the two nodes joined by the respective arc. The syntactic labels used in this description and in the accompanying figures are in common use in this discipline and are therefore assumed to be familiar to the specialist in this field. However, the syntactic labels used in the various parse structures are also listed in an explanatory glossary at the end of this description.

An alternative way of representing the parse structure is shown in structure diagram 1 below. In this structure diagram 1 the translation units are arranged one below the other, together with the respective syntactic labels. The dependency relations are shown by the use of varying indentation before the syntactic labels. This type of representation of a syntactic structure is also assumed to be familiar to the specialist in this field.

Structure diagram No. 1:

```
[GOV set                           [GOV movu
 [OBJ switch [the]                  [OBJ (((bar)sxalt)ilo) [la]
  [ATR shutoff ]
  [ATR of                            [ATR de
   [PARG tank [the]                   [PARG ((al)(fuel)ujo) [la]
    [ATR wing ]
    [ATR outer ]                        [ATR ekstera ]


   [ATR right-hand ]]]]               [ATR dekstra ]]]]
[ADVC to                           [ADVC al
 [PARG "OPEN" ]]]]                  [PARG "OPEN" ]]]]
```

It should be pointed out here that the two words "the switch", and similarly the two words "the tank" are treated as a single unit, so that the "ATR" relation between "switch" and "the" and the "ATR" relation between "tank" and "the", both of which are present in figure 1, do not need to be represented separately.

If this structure is now coded by assigning an alphanumerical code to each translation unit there results a structure such as, for example, that shown in structure diagram No. 2:

Structure diagram No. 2:

```
[GOV 69,set                          [GOV 69-u,movi
 [OBJ 70,switch [the]                 [OBJ 70,(((70.1,bar)sxalt)ilo) [la]
  [ATR 70.1,shutoff ]
  [ATR 71,of                            [ATR 71,de
   [PARG 72,tank [the]                   [PARG 72,((72.1,al)(fuel)ujo) [la]
    [ATR 72.1,wing ]
    [ATR 73,outer ]                        [ATR 73,ekstera ]
    [ATR 74,right-hand ]]]]                [ATR 74,dekstra ]]]]
 [ADVC 75,to                          [ADVC 75,al
  [PARG 76,"OPEN" ]]]]                  [PARG 76,"OPEN" ]]]]
```

The code numbers shown in diagram 2 must in any case be such that each of the translation units can be unambiguously identified by the relevant code. A more detailed explanation of this coding is given below. It should be pointed out that the corresponding translation units in both sentences are identified by identical code numbers. The English unit "the right-hand outer wing tank" is identified by the same code number as the corresponding unit in Esperanto, "la dekstra ekstera alfuelujo". This invention is not, of course, restricted to bilingual text corpora in which one of the languages is Esperanto. The invention can be applied to bilingual corpora made up from texts in any languages whatever.

In sample corpus 1, consisting as it does of only two sentences, the only relations which can be established are those between the translation units which correspond to each other in the two sentences. These correspondences, which can be termed "horizontal relations", are shown schematically by the arrows in figure 3. Figure 3 shows schematically, on the left, a memory unit in which the English text is stored and, on the right, a memory unit in which the Esperanto text is stored. The horizontal relations between the corresponding translation units in the two texts are established by means of the code numbers shown above the linking arrows in the middle of figure 3. Each translation unit consists of everything within the contours indicated by the linking arrows. For example, translation unit No. 71 consists, on the English side, of the expression "of the outer wing tank".

In a larger text corpus, such as will be used for practical purposes, it is possible to define not only such horizontal relations, but also to define vertical relations in the text. In order to make clear what is to be understood here under "vertical relations", the following English corpus will be used:

Sample corpus No. 2:

My secretary will arrive at three.
Please pick him up at the airport.

A human translator will recognize that since the word "him" is used in the second sentence to refer back to "secretary", the word "secretary" should be translated into Dutch, for example, as "secretaris" (a masculine form) and not by "secretaresse" (a feminine form). In the course of the automatic translation of this text, the choice between the masculine and feminine senses of "secretary" will not be self-evident to the translation machine. However, establishing a link to the word "him", and thereby indicating that the masculine sense should be chosen in the translation, will resolve the uncertainty for the translation machine.

Figure 4 illustrates example 2 graphically after the fashion of figure 3, showing two memory units containing the English text and the corresponding Dutch translation, respectively. The vertical relation between "secretary" and "him" is indicated by a linking arrow, coded as number 197. Setting this link allows the correct translation to be selected automatically for the Dutch version of the text. This same relation can also be indicated and coded in the Dutch text, using the same reference code number.

Figure 5 illustrates the general case of a text corpus consisting of a text in language A and the corresponding translation in language B. The figure shows both the horizontal and the vertical relations which must be superimposed on the bilingual corpus, in accordance with the invention, in order for the corpus to function as a full-fledged bilingual knowledge bank, with the aid of which translations can be produced automatically. The horizontal relations indicate which translation units correspond to each other in the two texts, and the vertical relations within each separate text serve in a way to add general knowledge to the text, also commonly referred to as "knowledge of the world". This general knowledge, which the human translator possesses by his very nature, can thus be taught to the computer.

In what follows, the way in which a knowledge bank, as defined by the invention, should be built up and codified will be described in greater detail, using as illustration the larger corpus of text given below. Sample corpus 3 consists of an existing English text, taken from an aircraft maintenance manual, together with the corresponding translation in Esperanto.

Sample corpus No. 3:

English text:

Outer Wing Tank Test

(1) On the fueling control panel, set the power switch to ON.
(a) Make sure that:
- the power light is off;
- the overflow valve lights are off;
- the shutoff valve lights are on.
(2) Apply pressure to the refueling system.
(a) Make sure that:
- the lights for the overflow valves of the outer wing tanks come on;
- the shutoff valve lights stay on;
- fuel does not flow into the tanks.
(3) Make sure there is no leakage from the refueling lines between the right-hand tank and the left-hand tank.
(4) Set the shutoff switch of the right-hand outer wing tank to OPEN.

(a) Make sure that:
- the light for the shutoff switch of the right-hand outer wing tank goes off;
- fuel flows into the right-hand tank.

(5) Hold the switch on the fueling control panel to TEST.

(a) Make sure that:
- the light for the right-hand shutoff valve comes on;
- the fuel flow stops.

Esperanto text:

Testo de la eksteraj alfuelujoj

(1) Sur la komandpanelo por fuelizado, movu la alimentsxaltilon al "ON".

(a) Kontrolu, ke:
- la signallampo de la alimento ne lumas;
- la signallampoj de la superversxaj valvoj ne lumas;
- la signallampoj de la baraj valvoj lumas.

(2) Apliku premon al la sistemo de refuelizado.

(a) Kontrolu, ke:
- la signallampoj de la superversxaj valvoj de la eksteraj alfuelujoj eklumas;
- la signallampoj de la baraj valvoj lumadas;
- fuelo ne fluas en la fuelujojn.

(3) Kontrolu, ke ne likas la refuelizaj tuboj inter la dekstra fuelujo kaj la maldekstra fuelujo.

(4) Movu la barsxaltilon de la dekstra ekstera alfuelujo al "OPEN".

(a) Kontrolu, ke:
- la signallampo de la barsxaltilo de la dekstra ekstera alfuelujo cxesas lumi;
- fuelo fluas en la dekstran fuelujon.

(5) Tenu la sxaltilon sur la komandpanelo por fuelizado cxe "TEST".

(a) Kontrolu, ke:
- la signallampo de la dekstra barvalvo eklumas;
- la fuelfluo cxesas.

If now both texts of the above corpus are each analysed with the aid of a parser in order to determine the syntactic structure of each text, the result may be shown as follows:

Structure diagram No. 3:

Syntactic structures of the example texts in English and Esperanto.

```
 [GOV test
  [ATR tank
   [ATR wing ]
   [ATR outer ]]]

["(1)"
 [GOV set
  [ADVA on
   [PARG panel [the]
    [ATR control
     [ATR fueling ]]]]
  [OBJ switch [the]
   [ATR power ]]
  [ADVC to
   [PARG "ON" ]]]]

["(1)(a)"
 [GOV make
  [PRED sure ]
  [OBJ that
   [SUBC "; -"
```

```
 [GOV testo
  [ATR de
   [PARG ((al)(fuel)ujo)j [la]
    [ATR ekstera ]]]]

["(1)"
 [GOV movu
  [ADVA sur
   [PARG ((komand)panelo) [la]
    [ATR por
     [PARG ((fuel)izado) ]]]]
  [OBJ (((aliment)sxalt)ilo) [la] ]
  [ADVC al
   [PARG "ON" ]]]]

["(1)(a)"
 [GOV kontrolu
  [OBJ ke
   [SUBC "; -"
    [SUBC-C "; -"
```

```
    [SUBC-C "; -"
     [SUBC-C be
      [PRED off ]
      [SUBJ light [the]
       [ATR power ]]]
[SUBC-C be
 [PRED off ]
 [SUBJ lights [the]
  [ATR valve
   [ATR overflow ]]]]
    [SUBC-C be
     [PRED on ]
     [SUBJ lights [the]
      [ATR valve
       [ATR shutoff ]]]]]]]]
```

```
[SUBC-C lumas
 [ADVA ne]
 [SUBJ ((signal)lampo) [la]
  [ATR de
   [PARG alimento [la] ]]]]
[SUBC-C lumas
 [ADVA ne]
 [SUBJ ((signal)lampo)j [la]
  [ATR de
   [PARG valvoj [la]
    [ATR ((super)versxa)]]]]]]
     [SUBC-C lumas
     [SUBJ ((signal)lampo)j [la]
      [ATR de
        [PARG valvoj [la]
          [ATR bara ]]]]]]]]
```

```
["(2)"
 [GOV apply
  [OBJ pressure ]
  [ADVC to
   [PARG system [the]
    [ATR refueling ]]]]]
```

```
["(2)"
[GOV apliku
 [OBJ premo ]
 [ADVC al
  [PARG sistemo [la]
   [ATR de
    [PARG ((re)(fuel)izado)]]]]]]
```

```
["(2)(a)"
 [GOV make
  [PRED sure ]
  [OBJ that
   [SUBC "; -"
    [SUBC-C "; -"
     [SUBC-C come
      [PRED on ]
      [SUBJ lights [the]
       [ATR for
        [PARG valves [the]
         [ATR overflow ]
```

```
["(2)(a)"
 [GOV kontrolu
  [OBJ ke
   [SUBC "; -"
    [SUBC-C "; -"
     [SUBC-C  ((ek)lumas)
      [SUBJ ((signal)lampo)j [la]
       [ATR de
        [PARG valvoj [la]
         [ATR ((super)versxa) ]
          [ATR de
           [PARG ((al)(fuel)ujo)j [la]
```

```
        [ATR of
  [PARG tanks [the]
   [ATR wing ]
   [ATR outer ]]]]]]]
  [SUBC-C st
   [PRED on ]
   [SUBJ lights [the]
    [ATR valve
     [ATR shutoff ]]]]
 [SUBC-C flow
  [ADVA not ]
   [SUBJ fuel ]
    [ADVC into
     [PARG tanks [the] ]]]]]]]
```

```
            [ATR ekstera ]]]]]]]
   [SUBC-C (lum)adas
    [SUBJ ((signal)lampo)j [la]
     [ATR de
       [PARG valvoj [la]
            [ATR bara ]]]]]]
       [SUBC-C fluas
        [ADVA ne]
        [SUBJ fuelo ]
        [ADVC alen
         [PARG ((fuel)ujo)j[la]]]]]]]
```

```
["(3)"
 [GOV make
  [PRED sure ]
  [OBJ is
   [ADVC there ]
   [SUBJ leakage
    [ATR no ]
    [ATR from
     [PARG lines [the]
      [ATR refueling ]
      [ATR between
       [PARG and
        [PARG-C tank [the]
         [ATR right-hand ]]
        [PARG-C tank [the]
         [ATR left hand ]]]]]]]]]]
```

```
["(3)"
 [GOV kontrolu
  [OBJ ke
   [SUBC likas
    [ADVA ne]
    [SUBJ tuboj [la]
     [ATR ((re)(fuel)iza) ]
     [ATR inter
      [PARG kaj
       [PARG-C ((fuel)ujo) [la]
        [ATR dekstra ]]
       [PARG-C ((fuel)ujo) [la]
        [ATR ((mal)dekstra)]]]]]]]]
```

```
["(4)"
 [GOV set
  [OBJ switch [the]
   [ATR shutoff ]
   [ATR of
```

```
["(4)"
 [GOV movu
  [OBJ (((bar)sxalt)ilo) [la]
   [ATR de
    [PARG ((al)(fuel)ujo) [la]
```

```
  [PARG tank [the]
   [ATR wing ]
   [ATR outer ]
   [ATR right-hand ]]]]
[ADVC to
 [PARG "OPEN" ]]]]
```

```
    [ATR ekstera ]
    [ATR dekstra ]]]]
 [ADVC al
  [PARG "OPEN" ]]]]
```

```
["(4)(a)"
 [GOV make
  [PRED sure ]
  [OBJ that
   [SUBC "; -"
    [SUBC-C go
     [PRED off
  [SUBJ light [the]
      [ATR for
       [PARG switch [the]
        [ATR shutoff ]
        [ATR of
         [PARG tank [the]
          [ATR wing ]
          [ATR outer ]
          [ATR right-hand ]]]]]]]
    [SUBC-C flow
     [SUBJ fuel ]
     [ADVC into
      [PARG tank [the]
       [ATR right-hand ]]]]]]]]
```

```
["(4)(a)"
 [GOV kontrolu
  [OBJ ke
   [SUBC "; -"
    [SUBC-C cxesas
     [INFC lumi ]
     [SUBJ ((signal)lampo) [la]
   [ATR de
       [PARG (((bar)sxalt)ilo) [la]
        [ATR de
         [PARG ((al)(fuel)ujo) [la]
          [ATR ekstera ]
          [ATR dekstra ]]]]]]]
     [SUBC-C fluas
      [SUBJ fuelo ]
      [ADVC alen ]]]]]]]
       [PARG ((fuel)ujo) [la]
        [ATR dekstra ]]]]]]]]
```

```
["(5)"
 [GOV hold
  [OBJ switch [the]
   [ATR on
    [PARG panel [the]
     [ATR control
      [ATR fueling ]]]]]
  [ADVC to
```

```
["(5)"
 [GOV tenu
  [OBJ ((sxalt)ilo) [la]
   [ATR sur
    [PARG ((komand)panelo) [la]
     [ATR por
      [PARG ((fuel)izado) ]]]]]
  [ADVC cxe
```

```
   [PARG "TEST" ]]]]

[“(5)(a)"
 [GOV make
  [PRED sure ]
  [OBJ that
   [SUBC "; -"
    [SUBC-C come
     [PRED on ]
     [SUBJ light [the]
      [ATR for
       [PARG valve [the]
        [ATR shutoff ]
        [ATR right-hand ]]]]]
    [SUBC-C stop
     [SUBJ flow [the]
      [ATR fuel ]]]]]]]
```

```
   [PARG "TEST" ]]]]

["(5)(a)"
 [GOV kontrolu
  [OBJ ke
   [SUBC "; -"
    [SUBC-C ((ek)lumas)
     [SUBJ ((signal)lampo) [la]
      [ATR de
       [PARG ((bar)valvo) [la]
        [ATR dekstra ]]]]]
    [SUBC-C cxesas
     [SUBJ ((fuel)fluo) [la] ]]]]]]
```

If in the above syntactic structures the translation units are now coded with a numerical code (which will be further discussed below), the following result is obtained:

```
    [ATR 7/1,control
     [ATR 8,fueling ]]]]        [ATR 8,por
                                 [PARG 8/1,((fuel)izado) ]]]]

  [OBJ 10,switch [the]      [OBJ10,(((10.1,aliment)sxalt)ilo)[la]]
   [ATR 10.1,power ]]
  [ADVC 11,to                [ADVC 11,al
   [PARG 12,"ON" ]]]]         [PARG 12,"ON" ]]]]

["(1)(a)"                  ["(1)(a)"
 [GOV 13,make               [GOV 13-u,kontroli
  [PRED 13/1,sure ]
  [OBJ 14,that               [OBJ 14,ke
   [SUBC 15,"; -"             [SUBC 15,"; -"
    [SUBC-C 16,"; -"           [SUBC-C 16,"; -"
     [SUBC-C 17,be              [SUBC-C 17-as,lumi
      [PRED 17/1,off ]           [ADVA 17/1,ne ]
      [SUBJ 18,light [the]       [SUBJ 18,((signal)lampo) [la]
       [ATR 19,20,power ]]]       [ATR 19,de
                                   [PARG 20,alimento [la] ]]]]
     [SUBC-C 21,be              [SUBC-C 21-as,lumi
      [PRED 21/1,off ]           [ADVA, 21/1,ne]
      [SUBJ 22,s,22.1,light [the] [SUBJ 22,j,22.1,((signal)lampo)
                                                          [la]
       [ATR 23,24,valve           [ATR 23,de
                                   [PARG 23/1,j,24,valvo [la]
        [ATR 25,overflow ]]]]       [ATR 25,((super)versxa) ]]]]]]
    [SUBC-C 26,be              [SUBC-C 26-as,lumi
     [PRED 26/1,on ]
     [SUBJ 27,s,27.1,light [the] [SUBJ 27,j,27.1,((signal)lampo)
                                                         [la]
      [ATR 28,29,valve           [ATR 28,de
                                  [PARG 28/1,j,29,valvo [la]
       [ATR 30,shutoff ]]]]]]]]   [ATR 30,bara ]]]]]]]]]

["(2)"                     ["(2)"
 [GOV 31,apply              [GOV 31-u,apliki
  [OBJ 32,pressure ]         [OBJ 32,premo ]
```

```
[ADVC 33,to                    [ADVC 33,al
 [PARG 34,system [the]          [PARG 34,sistemo [la]
  [ATR 35,refueling ]]]]         [ATR 35,de
                                  [PARG 35/1,((re)(fuel)izado) ]]]]]]

["(2)(a)"                      ["(2)(a)"
 [GOV 37,make                   [GOV 37-u,kontroli
  [PRED 37/1,sure ]
  [OBJ 38,that                   [OBJ 38,ke
   [SUBC 39,"; -"                 [SUBC 39,"; -"
    [SUBC-C 40,"; -"               [SUBC-C 40,"; -"
     [SUBC-C 41,come                [SUBC-C 41-as,((ek)lumi)
      [PRED 41/1,on ]
      [SUBJ 42,s,42.1,light [the] [SUBJ 42,j,42.1,((signal)lampo)
                                                          [la]
      [ATR 43,for                  [ATR 43,de
       [PARG 44,s,44.1,valve [the] [PARG 44,j,44.1,valvo [la]
        [ATR 45,overflow ]           [ATR 45,((super)versxa) ]
        [ATR 46,of                   [ATR 46,de
         [PARG 47,s,47.1,tank [the]   [PARG47,j,47.1,((47.2,al)
                                              (fuel)ujo) [la]
          [ATR 47.1,wing ]
          [ATR 48,outer ]]]]]]]       [ATR 48,ekstera ]]]]]]
    [SUBC-C 49,stay                [SUBC-C 49-as,(lum)adi
     [PRED 49/1,on ]
     [SUBJ 50,s,50.1,light [the] [SUBJ 50,j,50.1,((signal)lampo)
                                                          [la]
      [ATR 51,52,valve             [ATR 51,de
                                    [PARG 51/1,j,52,valvo [la]
       [ATR 53,shutoff ]]]]          [ATR 53,bara ]]]]]]
    [SUBC-C 54,flow                [SUBC-C 54-as,flui
     [ADVA, 54.1,not]               [ADVA, 54.1,ne]
     [SUBJ 55,fuel ]                [SUBJ 55,fuelo ]
     [ADVC 56,into                  [ADVC 56,alen
      [PARG 57,s,57.1,tank [the] ]]]]]]]
                                    [PARG 57,j,57.1,((fuel)ujo) [la]
                                                       ]]]]]]]
```

```
["(3)"                        ["(3)"
 [GOV 58,make                  [GOV 58-u,kontroli
  [PRED 58/1,sure ]
  [OBJ 59,60,is                 [OBJ 59,ke
   [ADVC 60/1,there ]            [SUBC 60-as,liki
   [SUBJ 60/2,leakage             [ADVA 60/1,ne]
    [ATR, 60/3,no]
    [ATR 60/4,from
     [PARG 61,s,61.1,line [the] [SUBJ 61,j,61.1,tubo [la]
      [ATR 62,refueling ]         [ATR 62,((re)(fuel)iza) ]
      [ATR 63,between             [ATR 63,inter
       [PARG 64,and                [PARG 64,kaj
        [PARG-C 65,tank [the]       [PARG-C 65,((fuel)ujo) [la]
         [ATR 66,right-hand ]]       [ATR 66,dekstra ]]
        [PARG-C 67,tank [the]       [PARG-C 67,((fuel)ujo) [la]
         [ATR 68,left-hand ]]]]]]]]]]
                                     [ATR 68,((mal)dekstra)
                                               ]]]]]]]]]
```

```
["(4)"                        ["(4)"
 [GOV 69,set                   [GOV 69-u,movi
  [OBJ 70,switch [the]          [OBJ 70,(((70.1,bar)sxalt)ilo) [la]
   [ATR 70.1,shutoff ]
   [ATR 71,of                    [ATR 71,de
    [PARG 72,tank [the]           [PARG 72,((72.1,al)(fuel)ujo) [la]
     [ATR 72.1,wing ]
     [ATR 73,outer ]                [ATR 73,ekstera ]
     [ATR 74,right-hand ]]]]        [ATR 74,dekstra ]]]]
  [ADVC 75,to                    [ADVC 75,al
   [PARG 76,"OPEN" ]]]]           [PARG 76,"OPEN" ]]]]
```

```
["(4)(a)"                     ["(4)(a)"
 [GOV 78,make                  [GOV 78-u,kontroli
  [PRED 78/1,sure ]
  [OBJ 79,that                  [OBJ 79,ke
   [SUBC 80,"; -"                [SUBC 80,"; -"
```

```
[SUBC-C 81,go                [SUBC-C 81-as,cxesi
 [PRED 81/1,off ]             [INFC 81/1,lumi ]
 [SUBJ 83,light [the]         [SUBJ 83,((signal)lampo) [la]
  [ATR 84,for                  [ATR 84,de
   [PARG 85,switch [the]        [PARG 85,(((85.1,bar)sxalt)ilo)
                                                             [la]
    [ATR 85.1,shutoff ]
    [ATR 86,of                    [ATR 86,de
     [PARG 87,tank [the]           [PARG 87,((87.1,al)(fuel)ujo)
                                                             [la]
      [ATR 87.1,wing ]
      [ATR 88,outer ]                [ATR 88,ekstera ]
      [ATR 89,right-hand ]]]]]]] [ATR 89,dekstra ]]]]]]
[SUBC-C 90,flow               [SUBC-C 90-as,flui
 [SUBJ 91,fuel ]               [SUBJ 91,fuelo ]
 [ADVC 92,into                 [ADVC 92,alen
  [PARG 93,tank [the]           [PARG 93,((fuel)ujo) [la]
   [ATR 94,right-hand ]]]]]]]] [ATR 94,dekstra ]]]]]]]

["(5)"                        ["(5)"
 [GOV 95,hold                  [GOV 95-u,teni
  [OBJ 96,switch [the]          [OBJ 96,((sxalt)ilo) [la]
   [ATR 97,on                    [ATR 97,sur
    [PARG 98,panel [the]          [PARG 98,((komand)panelo) [la]
     [ATR 98/1,control
      [ATR 99,fueling ]]]]]        [ATR 99,por
                                    [PARG 99/1,((fuel)izado) ]]]]]
  [ADVC 101,to                  [ADVC 101,cxe
   [PARG 102,"TEST" ]]]]         [PARG 102,"TEST" ]]]]

["(5)(a)"                     ["(5)(a)"
 [GOV 103,make                 [GOV 103-u,kontroli
  [PRED 103/1,sure ]
  [OBJ 104,that                 [OBJ 104,ke
   [SUBC 105,"; -"               [SUBC 105,"; -"
    [SUBC-C 106,come              [SUBC-C 106-as,((ek)lumi)
     [PRED 106/1,on ]
```

```
[SUBJ 107,light [the]        [SUBJ 107,((signal)lampo) [la]
 [ATR 108,for                 [ATR 108,de
  [PARG 109,valve [the]        [PARG 109,((109.1,bar)valvo) [la]
   [ATR 109.1,shutoff ]
   [ATR 110,right-hand ]]]]]   [ATR 110,dekstra ]]]]]
[SUBC-C 111,stop             [SUBC-C 111-as,cxesi
 [SUBJ 112,flow [the]         [SUBJ 112,((112.1,fuel)fluo) [la]
                                                        ]]]]]]
  [ATR 112.1,fuel ]]]]]]]
```

In general, in any given corpus, a number of translation units which have already been assigned codes will reoccur one or more times later on in the same corpus. In sample corpus 3, for example, the combination "outer wing tank" occurs several times. If such a translation unit were to be recorded each time anew, this would result in considerable redundancy in the coded structure. This can be avoided by assigning to translation units which have been assigned a code number earlier on, a code which refers back to the first coding. In the following modified structure the coding has been adjusted in this sense.

Structure diagram No. 5:

```
[GOV 1,test                  [GOV 1,testo
 [ATR 2,3,tank                [ATR 2,de
  [ATR 3.1,wing ]              [PARG 2/1,j,3,((3.1,al)(fuel)ujo) [la]
  [ATR 4,outer ]]]              [ATR 4,ekstera ]]]]

["(1)"                       ["(1)"
 [GOV 5,set                   [GOV 5-u,movi
  [ADVA 6,on                   [ADVA 6,sur
   [PARG 7,panel [the]          [PARG 7,((komand)panelo) [la]
    [ATR 7/1,control
     [ATR 8,fueling ]]]]          [ATR 8,por
                                   [PARG 8/1,((fuel)izado) ]]]]
  [OBJ 10,switch [the]         [OBJ 10,(((10.1,aliment)sxalt)ilo)
                                                        [la] ]
```

```
    [ATR 10.1,power ]]
   [ADVC 11,to                  [ADVC 11,al
    [PARG 12,"ON" ]]]]           [PARG 12,"ON" ]]]]

["(1)(a)"                     ["(1)(a)"
 [GOV 13,make                  [GOV 13-u,kontroli
  [PRED 13/1,sure ]
  [OBJ 14,that                  [OBJ 14,ke
   [SUBC 15,"; -"                [SUBC 15,"; -"
    [SUBC-C 16,"; -"              [SUBC-C 16,"; -"
     [SUBC-C 17,be                 [SUBC-C 17-as,lumi
      [PRED 17/1,off ]              [ADVA 17/1,ne ]
      [SUBJ 18,light [the]          [SUBJ 18,((signal)lampo) [la]
       [ATR 19,20{=10.1},power ]]] [ATR 19,de
                                     [PARG 20{=10.1},alimento [la]
                                                             ]]]]
     [SUBC-C 21:17-18              [SUBC-C 21:17-18
      [22,s,22.1:18-19              [22,j,22.1:18-19
       [23,24,valve                  [23,de
                                      [PARG 23/1,j,24,valvo [la]
        [ATR 25,overflow ]]]]          [ATR 25,((super)versxa) ]]]]]
    [SUBC-C 26,be                 [SUBC-C 26-as,lumi
     [PRED 26/1,on ]
     [SUBJ 27:22-25                [SUBJ 27:22-25
       [30,shutoff ]]]]]]]          [30,bara ]]]]]]]]

["(2)"                        ["(2)"
 [GOV 31,apply                 [GOV 31-u,apliki
  [OBJ 32,pressure ]            [OBJ 32,premo ]
  [ADVC 33,to                   [ADVC 33,al
   [PARG 34,system [the          [PARG 34,sistemo [la]
    [ATR 35,refueling ]]]]]       [ATR 35,de
                                   [PARG 35/1,((re)(fuel)izado) ]]]]]]

["(2)(a)"                     ["(2)(a)"
 [GOV 37:13-17-21-26           [GOV 37:13-17-21-26
```

```
[41,come                     [41-as,((ek)lumi)
 [PRED 41/1,on ]
 [SUBJ 42{<22}:22-23          [SUBJ 42{<22}:22-23
  [43,for                      [43,de
   [PARG 44,s,44.1:24           [PARG 44{<23/1},j,44.1:24
    [ATR 46,of                   [ATR 46,de
     [PARG 47,s,47.1:3 ]]]]]]     [PARG 47,j,47.1:3 ]]]]]]
[49,stay                     [49-as,(lum)adi
 [PRED 49/1,on ]
 [SUBJ 50{=27}:27 ]]          [SUBJ 50{=27}:27 ]]
[54,flow                     [54-as,flui
 [ADVA, 54.1,not]             [ADVA, 54.1,ne]
 [SUBJ 55,fuel ]              [SUBJ 55,fuelo ]
 [ADVC 56,into                [ADVC 56,alen
  [PARG 57{=47},s,57.1,tank [the] ]]]]]
                               [PARG 57{=47},j,57.1,((fuel)ujo)
                                                   [la] ]]]]]


["(3)"                      ["(3)"
 [GOV 58:13-14               [GOV 58:13-14
  [59,60,is                   [59,ke
   [ADVC 60/1,there ]          [SUBC 60-as,liki
   [SUBJ 60/2,leakage           [ADVA 60/1,ne]
    [ATR, 60/3,no]
    [ATR 60/4,from
     [PARG 61,s,61.1,line [the] [SUBJ 61,j,61.1,tubo [la]
      [ATR 62,refueling ]        [ATR 62,((re)(fuel)iza) ]
      [ATR 63,between            [ATR 63,inter
       [PARG 64,and               [PARG 64,kaj
        [PARG-C 65{<47}:57.1       [PARG-C 65{<47}:57.1
         [ATR 66,right-hand ]]      [ATR 66,dekstra ]]
        [PARG-C 67{<47}:57.1       [PARG-C 67{<47}:57.1
         [ATR 68,left-hand ]]]]]]]]]
                                    [ATR 68,((mal)dekstra) ]]]]]]]]
```

```
["(4)"                          ["(4)"
 [GOV 69:5-6-10-12               [GOV 69:5-6-10-12
  [70(10),switch [the]            [70(10),(((70.1,bar)sxalt)ilo) [la]
   [ATR 70.1,shutoff ]
   [ATR 71,of                      [ATR 71,de
    [PARG 72{=65}:3                 [PARG 72{=65}:3
     [ATR 74:66 ]]]]                 [ATR 74:66 ]]]]
   [76(12),"OPEN" ]]]              [76(12),"OPEN" ]]]

["(4)(a)"                       ["(4)(a)"
 [GOV 78:13-16-21                [GOV 78:13-16-21
    [81,go                          [81-as,cxesi
     [PRED 81/1,off ]                [INFC 81/1,lumi ]
     [SUBJ 83{<27}:18-19             [SUBJ 83{<27}:18-19
      [84:43                          [84:43
       [85:70 ]]]]                     [85:70 ]]]]
    [90:54-54.1-57                   [90:54-54.1-57
      [93(57):65 ]]]]                  [93(57):65]]]]

["(5)"                          ["(5)"
 [GOV 95,hold                    [GOV 95-u,teni
  [OBJ 96,switch [the]            [OBJ 96,((sxalt)ilo) [la]
   [ATR 97:6 ]]                    [ATR 97:6 ]]
  [ADVC 101,to                    [ADVC 101,cxe
   [PARG 102,"TEST" ]]]]           [PARG 102,"TEST" ]]]]

["(5)(a)"                       ["(5)(a)"
 [GOV 103:13-16-21               [GOV 103:13-16-21
    [106:41-42                     [106:41-42
     [107{=83}:83-85                [107{=83}:83-85
       [109,valve [the]               [109,((109.1:70.1)valvo) [la]
        [ATR 109.1:70.1 ]
        [ATR 110:66]]]]                 [ATR 110:66]]]]
   [111,stop                      [111-as,cxesi
    [SUBJ 112{=90},flow [the]      [SUBJ 112{=90},((112.1,fuel)fluo)
                                                   [la] ]]]]
```

```
[ATR 112.1,fuel ]]]]]
```

In what follows, a more detailed explanation will be given of the specific coding applied above in structure diagrams 4 and 5, which encode example corpus 3.

First, a translation unit is identified by a number followed by a comma. The word which governs the translation unit follows immediately after the comma. All lexical elements which depend on that word in the syntactic structure are regarded as part of the same translation unit. Henceforth, the abbreviation "TU" will be used to refer to the various translation units.

**Example:**

```
[3,tank                                  [3,((3.1,al)(fuel)ujo)]
 [ATR 3.1,wing ]]
```

Here, TU 3 (translation unit 3) consists, in English, of the word "tank" and its dependent attribute "wing", and, in Esperanto, of the word "alfuelujo", which is shown with the root morphemes separated off by parentheses. TU 3.1 consists of the word "wing" in English and of the morpheme "al" in Esperanto, which is part of the word "alfuelujo".

It should be noted that decimal numbers have no special significance in this representation. For example, the number "4" could equally well have been used instead of "3.1".

Two translation units can differ in one language while being identical in the other.

**Example:**

```
[GOV 1,test                 [GOV 1,testo
 [ATR 2,3,tank               [ATR 2,de
  [ATR 3.1,wing ]]]           [PARG 3,((3.1,al)(fuel)ujo) [la] ]]]
```

In Esperanto TU 2 is headed by the preposition "de" and includes all its dependent elements. In English, on the other hand, TU 2 has no distinctive governor but simply consists of the English half of TU 3.

Words which do not themselves govern any translation unit receive the code number of the translation unit of which they form a part, followed by an oblique stroke ("slash").

**Example:**

```
[8,Netherlands                 [8,Nederland]
 [8/1,the]]
```

In this example, the English definite article "the" cannot be translated into Dutch. The article forms an integral part of the whole expression "the Netherlands", which (as TU 8) can be translated (as "Nederland").

It has already been pointed out above that the literal repetition of translation units which occur repeatedly in a text would lead to considerable redundancy, which should preferably be avoided. In the knowledge bank structure in its preferred formalization, the identification numbers already assigned to such translation units are used to avoid literal repetition. A number followed by a colon (":") and another number means that the translation unit coded by the first number has the same literal form as the translation unit coded by the second number.

Example:

```
[ATR 97:6]                          [ATR 97:6]
```

This example means that TU 97 has exactly the same form (in both languages) as the earlier recorded translation unit 6. By using this kind of coding the repeated recording of identical structures can be avoided. In this example, TU 6 has the following structure:

```
[ADVA 6,on                          [ADVA 6,sur
 [PARG 7,panel [the]                 [PARG 7,((komand)panelo) [la]
  [ATR 7/1,control
   [ATR 8,fueling ]]]]                [ATR 8,por
                                       [PARG 8/1,((fuel)izado) ]]]]
```

A repeated structure can, of course, accept new elements as dependents. However, these will always be assumed to depend on the governing word.

Example:

```
[PARG-C 65:57.1                     [PARG-C 65:57.1
 [ATR 66,right-hand ]]               [ATR 66,dekstra ]]
```

This example shows a new translation unit which has the same form as TU 57.1, except that a new attribute is attached to the head word of TU 57.1.

The form of a new TU may be only partly identical with a previous structure. In this case, those dependents which are not repeated are excluded by subtracting them from the relevant TU.

Example:

```
[GOV 37:13-17-21-26                 [GOV 37:13-17-21-26
    [41,come                            [41-as,((ek)lumi)
     .....]                              .....]
    [49,stay                            [49-as,(lum)adi
     .....]                              .....]
    [54,flow                            [54-as,flui
     .....]]                             .....]]
```

The string of figures "37:13-17-21-26" indicates that the new translation unit 37 has the form of TU 13, after subtraction of TU 17, TU 21 and TU 26. The new dependents (TUs 41, 49 and 54) are understood to replace the discarded TUs, and in the same order. Where the number of subtracted TUs is not equal to that of the newly added TUs, the attachment points have to be made explicit. In such cases the new TU code is followed, between parentheses, by the code of the TU it replaces.

Example:

```
    [90:54-54.1-57                      [90:54-54.1-57
      [93(57):65 ]]                       [93(57):65]]
```

This coding means that TU 90 has the form of TU 54, after subtraction of TUs 54.1 and 57, and that TU 57 is replaced by TU 93, which happens to have the same form as TU 65. All of these relations obtain for both the text in English and the text in Esperanto.

The above detailed description of the preferred embodiment of the coding system has so far only covered the coding of the horizontal relations, i.e. the coding of corresponding translation units in the two texts of a bilingual corpus, in such a way that that those corresponding translation units are recognizable and identifiable as such. It has already been pointed out above, however, that the bilingual knowledge bank as defined by the invention should preferably also include coding for vertical relations, which enable the computer to acquire a little "knowledge of the world", so that the computer can solve translation problems like that illustrated by sample corpus 2, without the aid of an operator. These vertical relations can be coded with the aid of references within each text.

References within a text concern the meaning of the translation units. Such references need not be the same as repetitions, although sometimes they may involve repetition of the literal form. References appear in the preferred coding system between braces, immediately following the code number of the relevant translation unit. In the sample material (structure diagram 5) two kinds of reference have been used: complete identity and the "member/set" relation.

Complete identity between the concepts represented by two translation units is marked by an equals sign (" = ").

```
Example:
    [107{=83}:83-85                  [107{=83}:83-85
      [109,valve [the]                [109,((109.1:70.1)valvo) [la]
       [ATR 109.1:70.1 ]
       [ATR 110:66]]]]                  [ATR 110:66]]]]
```

This example is taken from the last part of structure diagram 5. Here, translation unit 107 ("the light for the right-hand shutoff valve", in English) is identified with TU 83 ("the light for the shutoff switch of the right-hand outer wing tank"), because these two different forms in fact refer to the same object, namely a particular light. It does not follow from this identification that the translations in TU 107 and TU 83 are interchangeable. One translation may well be more appropriate than the other in a particular context. This referential identification is important, first and foremost, in order to impart an explicit structure to the implicit knowledge expressed in the text. The computer can make use of this structure for inference procedures. The member/set relation is marked by a "<".

```
Example:
    [SUBJ 83{<27}:18-19            [SUBJ 83{<27}:18-19
     [84:43                         [84:43
       [85:70 ]]]]                    [85:70 ]]]]
```

This example is also taken from structure diagram 5. The coding "83{<27}" means that the object referred to by translation unit 83 (in English, "the light for the shutoff switch of the right-hand outer wing tank"), is a member of the set referred to by TU 27 ("the shutoff valve lights"). From this identification the system can infer that TU 107, which has previously been identified with TU 83, is also a member of the set referred to by TU 27, in other words, that "the light for the right-hand shutoff valve" is also one of "the shutoff valve lights", a fact which had not been given explicitly. (All these relations are, of course, equally applicable when the same objects are referred to by the corresponding terms in Esperanto.) In this way the system can automatically check and improve the consistency of the knowledge base.

The method of coding described above will now be illustrated once more with the aid of another example. This next example is based on a simple bilingual corpus of text consisting of one sentence in Dutch and its translation in English:

<u>Sample corpus No. 4:</u>

Dutch:

Als u in Nederland in loondienst wilt gaan werken en onderdaan bent van een land, dat geen lid is van de Europese Economische Gemeenschap, dan zijn de volgende punten voor u van belang.

English:

If you plan to seek employment in the Netherlands and are a national of a country outside the European Economic Community, it is in your interest to read the following information.

Subjecting both sentences of sample corpus 4 to syntactic structure analysis with the aid of a parser, and then coding the resulting structures according to the principles outlined above produces the following bilingual knowledge bank:

```
[GOV 1,zijn                       [GOV 1,is
 [PREA 1/1,voor                    [SUBJ 1/1,it
  [PARG 1/2,u ]]                   [PREA 1/2,in
 [PREA 1/3,van                      [PARG 1/3,interest
  [PARG 1/4,belang ]]                [ATR 1/4,your ]]]
                                   [TO 1/5,to
                                    [INFC 1/6,read
 [SUBJ 19,punten                     [OBJ 19,information
  [ATR 20,de ]                        [ATR 20,the ]
  [ATR 21, volgende ]]                [ATR 21, following ]]]]
 [PROA 2,als                       [PROA 2,if
  [LIA 2/1,dan ]
  [SUBC 3,en                        [SUBC 3,and
   [SUBJ 4,u ]                       [SUBJ 4,you ]
   [SUBC-C 5,willen                  [SUBC-C 5,plan
    [INFC 5/1,gaan                    [TO 5/1,to
     [INFC 5/2,werken                  [INFC 5/2,seek
      [PREA 5/3,in                      [OBJ 5/3,employment ]]
       [PARG 5/4,loondienst ]]
```

```
      [PREA 7,in                        [PREA 7,in
       [PARG 8,Nederland ]]]]]            [PARG 8,Netherlands
                                           [ATR 8/1,the ]]]]]]
  [SUBC-C 9,zijn                      [SUBC-C 9,be
   [PRED 10,onderdaan                   [PRED 10,national
                                         [ATR 10/1,a ]
    [ATR 11,van                          [ATR 11,of
     [PARG 12,land                        [PARG 12,country
      [ATR 13,een ]                        [ATR 13,a ]
      [ATR 14,is                           [ATR 14,outside
       [SUBJ 14/1,dat ]
       [PRED 14/2,lid
        [ATR 14/3,geen ]
        [ATR 14/4,van
         [PARG 15,Gemeenschap               [PARG 15,Community
          [ATR 16,de ]                       [ATR 16,the ]
          [ATR 17,Europese ]                 [ATR 17,European ]
          [ATR 18,Economische ]]]]]]]]]]]
                                             [ATR 18,Economic ]]]]]]]]]]
```

These structures too could be visualized in the form of tree structures similar to those shown in figures 1 and 2. There are many other possibilities, however, and one of these has been chosen to present the structure from diagram 5 in the graphic form of figures 6 and 7. The form of presentation used in both figures is very similar to the way in which mathematical sets are represented. Each complete sentence (each complete set of relations) is shown in figures 6 and 7 within the ellipse a1 or b1 respectively. The conditional clause which is present in both sentences, and which is marked off by the word "als" or "if", is responsible, in the structural analysis, for the first major subdivision of the sentences, as clearly shown by the ellipses a2 and a3, or b2 and b3 respectively. The conditional clause itself is subdivided into two parts, as is immediately evident from figures 6 and 7. These two parts are delimited by ellipses a4 and a5, or b4 and b5 respectively, and the two parts are coupled together by the word "en" or "and", located inside ellipse a3 or b3 but outside ellipses a4 and a5, or b4 and b5. It will be clear without any further explanation in detail that the information contained in figures 6 and 7 in fact corresponds to the information which can be read from a tree structure. It is assumed here that a specialist in the field will need no further explanation.

It will be clear that the benefits which the bilingual knowledge bank as defined by the invention offers the user will increase with the growth of the knowledge bank or, in other words, as more text is added to the corpus. The said benefits can be summarized as follows:

1) The bilingual knowledge bank as defined by the invention provides the possibility of collecting various types of knowledge -lexical knowledge, concept-specific knowledge, general knowledge (knowledge of the world) and encyclopaedic knowledge, together with the expertise of the human translator - and of integrating them in such a way that the knowledge becomes accessible and comprehensible for a computer.

2) The knowledge bank as defined by the invention provides the computer with a learning capability. In the early stages of the construction of a bilingual knowledge bank as defined by the invention, the help of a human translator will be indispensable, but as the database increases in size the computer will be able to retrieve more and more translation units from the text already processed, together with the corresponding translations and including information about the context in which the translation unit is found. This means that the computer will need to ask fewer and fewer questions of the operator, the more the knowledge bank grows.

3) By the use of references to translation units already coded, a considerable compression of the contents of the knowledge bank - and consequently of the required storage space in memory - can be achieved, without impairing the knowledge capacity of the database.

4) By attaching, to each text added to the corpus, information about the date on which the text was added, it is possible to gradually replace "old" knowledge by "new" knowledge. Every language contains words which gradually fall into disuse, while on the other hand new words appear. In technical fields in particular, new words and terms are created daily, and words which were in common use over a given period are soon replaced by other words.

5) Selecting from the total knowledge bank those texts which have a bearing on a certain specific subject is simply a matter of using key words or key expressions. With reference to the examples discussed above, the expression "outer wing tank test", for instance, can be used as a key to retrieve from the total bilingual knowledge bank those texts which are related to this specific technical area (aircraft wings). Texts dealing with the wings of birds or other flying creatures, and texts concerning front-line tanks or other kinds of tanks beside fuel tanks will be ignored. In other words, in this way the bilingual knowledge bank can be used to select, from several alternative meanings of a given word, that meaning which is the most likely in view of the subject matter given by the context in which the word appears.

6) The bilingual knowledge bank as defined by the invention can be used, in principle, in either direction. On the basis of the above sample corpus 3, for example, an appropriate Esperanto translation can be retrieved for a given English unit, but an appropriate English translation can equally well be looked up for an Esperanto unit. Explanation of the syntactic labels in the parse structures

ADVA adverbial adjunct
ADVC adverbial complement
ATR attribute
GOV governor
INFC infinitival complement
OBJ direct object
PARG prepositional argument
PARG-C coordinated prepositional argument
PRED predicative
SUBC subordinate clause
SUBC-C coordinated subordinate clause
SUBJ subject
PROA propositional adjunct
LIA linking adjunct
PREA prepositional adjunct

## Claims

1. Bilingual knowledge bank comprising:
- a bilingual corpus of text consisting of a continuous text or texts in a first language and the corresponding translation in a second language,
- a syntactic structure corresponding to the text in the first language, and in which all the syntactic relations between the translation units of the text in the first language are shown,
- a syntactic structure corresponding to the translation in the second language, and in which all the syntactic relations between the translation units of the text in the second language are shown,
- and where translation units are identified by means of a code in both these syntactic structures, in such a way that a translation unit in the text in the one language is linked to the corresponding translation unit in the translation in the other language.

2. Bilingual knowledge bank according to claim 1, characterized in that translation units in either syntactic structure which have already appeared earlier in the text corpus are identified by the same code used for the earlier occurrence.

3. Bilingual knowledge bank according to claim 1 or 2, characterized in that translation units which appear in different places in the text corpus, but which are interrelated in meaning, are identified as such by a special code.

4. Knowledge bank according to any of the above claims, characterized in that the text corpus and the corresponding syntactic structures are stored in a machine-readable form on a computer memory device.

5. Knowledge bank according to any of the above claims, characterized in that one of the languages is Esperanto.

6. A method for constructing a knowledge bank according to any of the above claims, characterized in that the computer compares the structure of any text being added to the knowledge bank with the translation units of the text corpus already processed, and, if no match can be found with any of the translation units already present, informs the operator of this fact by sòme suitable means.

7. A method according to claim 6, characterized in that the operator is provided with suitable facilities for indicating to the computer that a certain relation exists between any two given translation units which may be located at any two different places in the corpus.

8. A method according to claim 7, characterized in that the operator is also provided with facilities for specifying the type of relation involved.

**Fig. 1: Syntactic parse structure for the English sentence**
"Set the shutoff switch of the right-hand outer wing tank to OPEN."

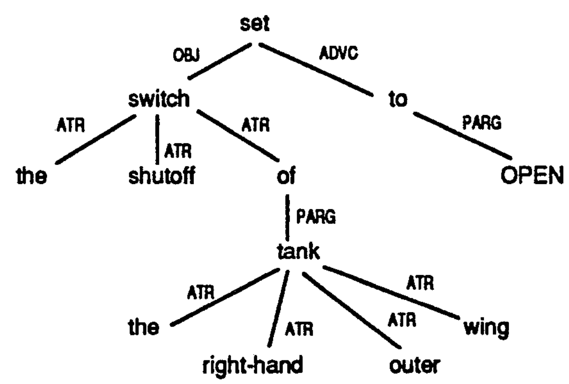


**Fig. 2: Syntactic parse structure for the same sentence in Esperanto**
"Movu la barsxaltilon de la dekstra ekstera alfuelujo al 'OPEN'."

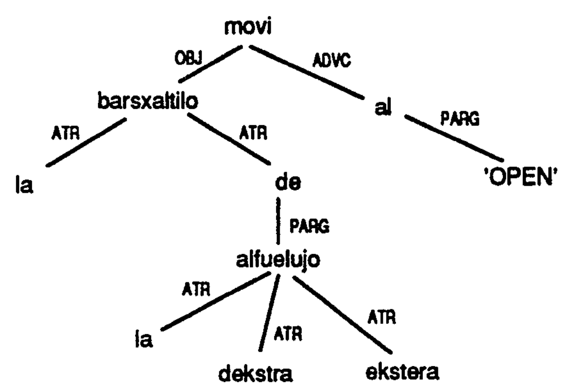

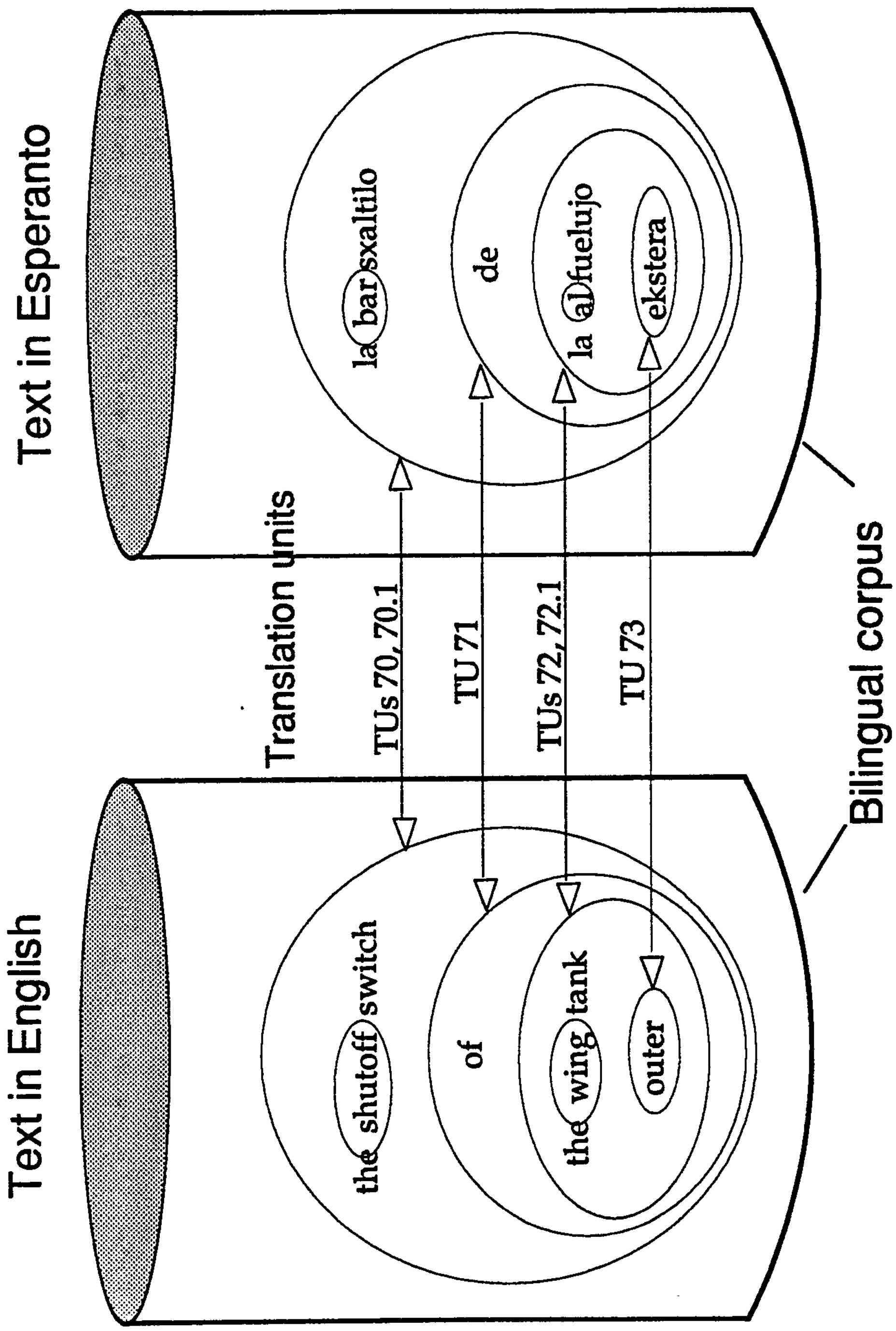

Text in English
the shutoff switch
of
the wing tank
outer
Text in Esperanto
la bar sxaltilo
de
la al fuelujo
ekstera
Translation units
TUs 70, 70.1
TU 71
TUs 72, 72.1
TU 73
Bilingual corpus


Fig. 3

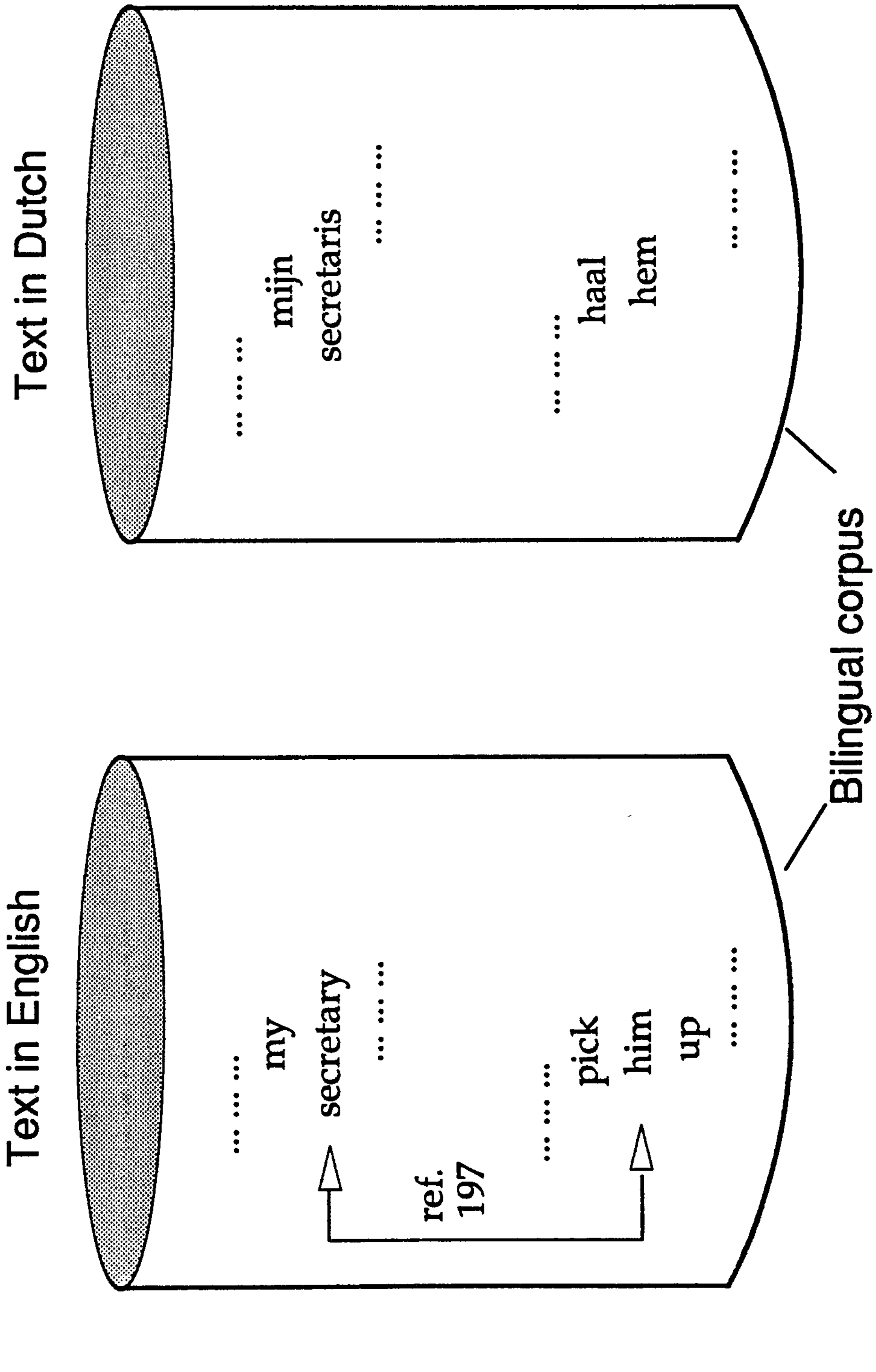
Text in English
... ... ...
my
secretary
... ... ...
ref.
197
... ... ...
pick
him
up
... ... ...
Text in Dutch
... ... ...
mijn
secretaris
... ... ...
... ... ...
haal
hem
... ... ...
Bilingual corpus

Fig 4

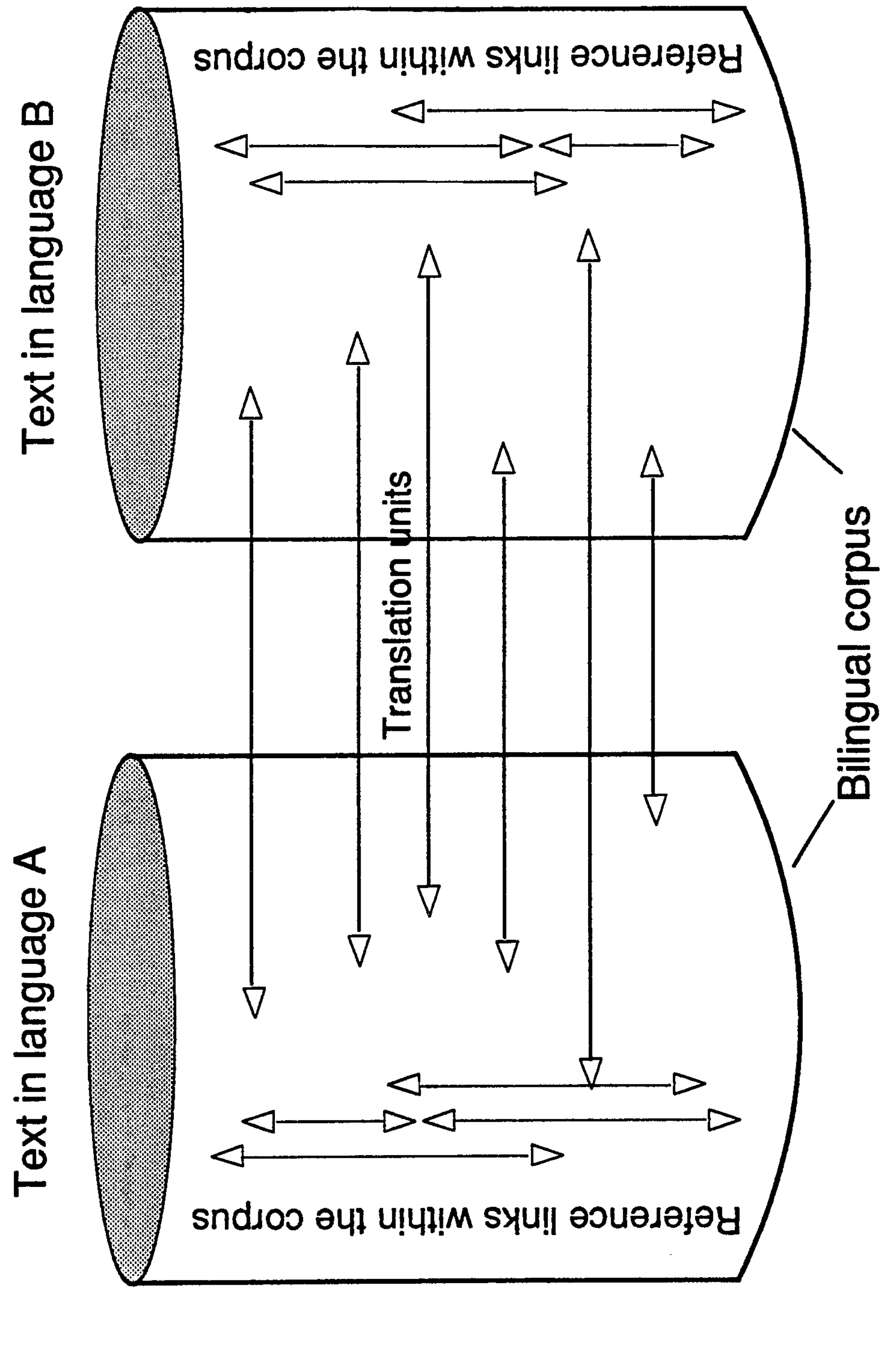
Text in language A
Text in language B
Reference links within the corpus
Reference links within the corpus
Translation units
Bilingual corpus

Fig. 5

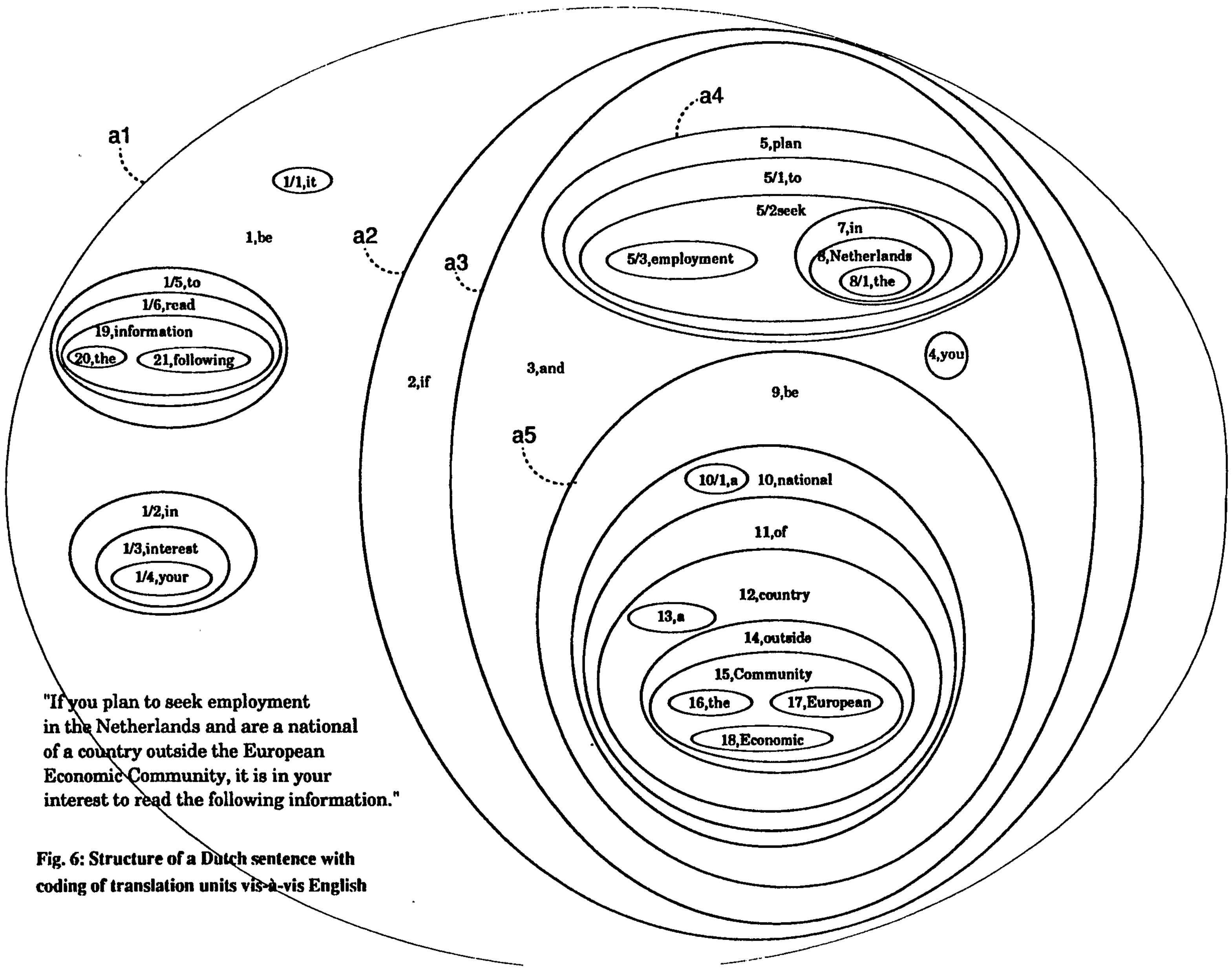


"If you plan to seek employment in the Netherlands and are a national of a country outside the European Economic Community, it is in your interest to read the following information."

Fig. 6: Structure of a Dutch sentence with coding of translation units vis-à-vis English

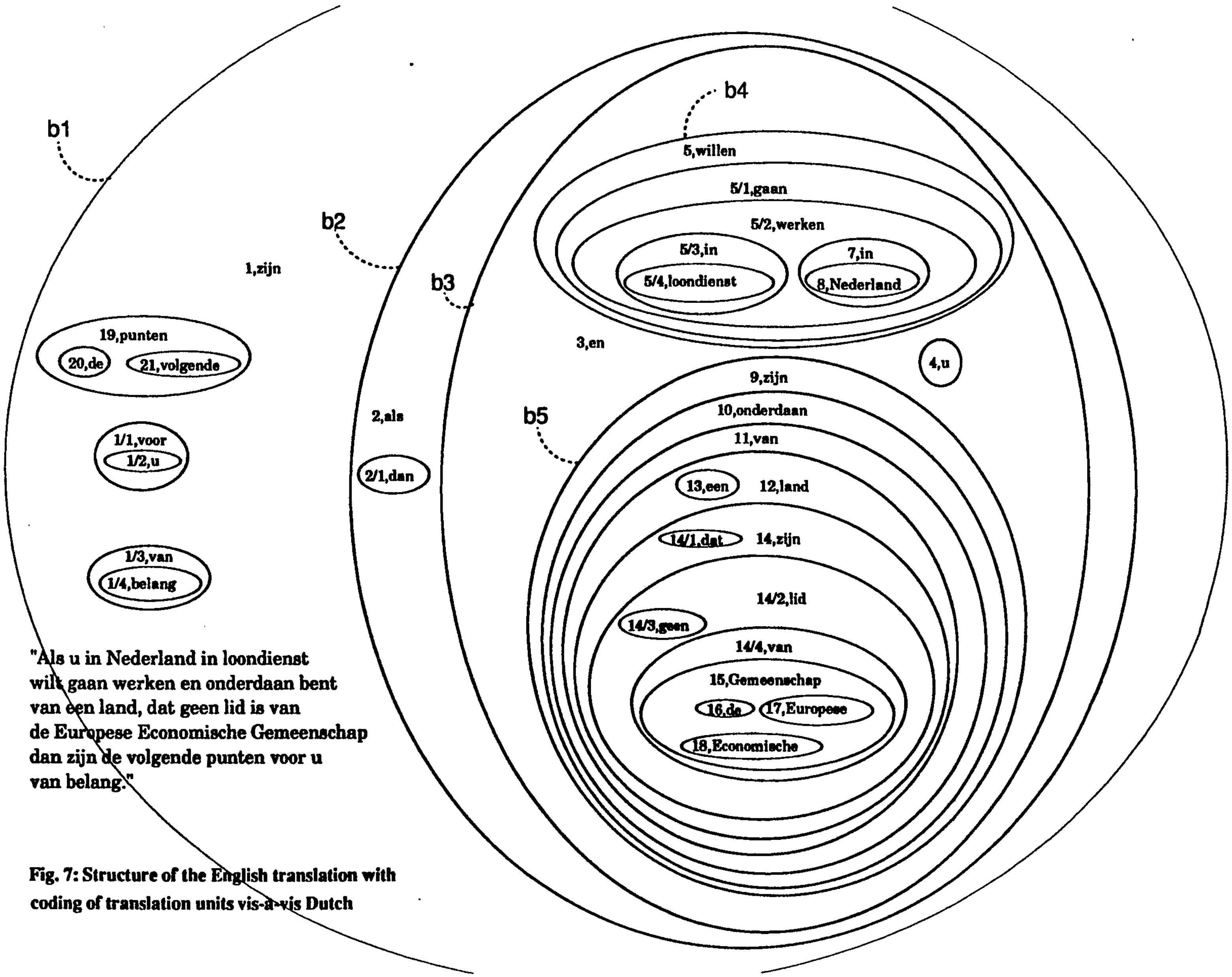


**Fig. 7: Structure of the English translation with coding of translation units vis-a-vis Dutch**

European Patent Office

# EUROPEAN SEARCH REPORT

Application Number

EP 90 20 0582

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | IBM TECHNICAL DISCLOSURE BULLETIN, vol. 31, no. 5, October 1988, pages 438-439, Armonk, New York, US; "Translation method by sentence examples" * Page 438, lines 14-17; figures 1-3 * --- | 1,4 | G 06 F 15/38 |
| A | SIEMENS REVIEW, vol. 54, no. 6, November/December 1987, pages 32-37, DE; J.A. ALONSO et al.: "Machine translation technology: on the way to market introduction" * Page 33, column 4, lines 31-52; figures 1,2 * --- | 1,4 | |
| A | IEEE MICRO, vol. 7, no. 4, August 1987, pages 73-80, IEEE, New York, US; M.A. SANAMRAD et al.: "A hardware syntactic analysis processor" * Page 74, column 1, lines 19-32; figure 1 * --- | 1,4 | TECHNICAL FIELDS SEARCHED (Int. Cl.5) |
| A | EP-A-0 274 281 (GACHOT S.A.) * Page 3, lines 41-52; claim 1 * --- | 1,4 | G 06 F 15/38 |
| A | WO-A-8 805 946 (TOLIN) * Page 4, lines 13-24; page 7, lines 19-20; page 8, lines 22-24; page 9, lines 6-10 * ----- | 1,4,5 | |

The present search report has been drawn up for all claims

| Place of search | Date of completion of the search | Examiner |
|---|---|---|
| THE HAGUE | 14-06-1990 | GUINGALE A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document